# EUROPÄISCHE PATENTSCHRIFT

(11) **EP 1 767 439 B1**
(45) Veröffentlichungstag und Bekanntmachung des Hinweises auf die Patenterteilung: **25.06.2014**
(21) Anmeldenummer: 06010022.9
(22) Anmeldetag: 16.05.2006
(51) Int. Cl.: B62D 25/12, E05F 1/10, E05F 15/12, H02K 7/06

(54) **Antriebseinrichtung**
Drive unit
Dispositif d'actionnement

(30) Priorität: 27.06.2005 DE 102005030052
(43) Veröffentlichungstag der Anmeldung: 28.03.2007
(73) Patentinhaber: Stabilus GmbH, 56070 Koblenz (DE)
(72) Erfinder: Ritter, Andreas, 56206 Hilgert (DE)
(74) Vertreter: Klein, Thomas

(56) Entgegenhaltungen:
- DE-A1- 10 117 934
- DE-A1- 10 117 935
- DE-A1- 10 313 440
- DE-A1- 10 330 176
- DE-A1- 19 604 501
- DE-C- 715 238
- DE-C1- 19 849 245
- GB-A- 593 175
- US-A- 5 346 045
- US-A1- 2005 022 453
- US-B1- 6 755 458

## Beschreibung

Die Erfindung bezieht sich auf eine Antriebseinrichtung insbesondere für eine Klappe eines Fahrzeugs, mit einem mit einem feststehenden Bauteil oder einem bewegbaren Bauteil verbindbaren ersten Befestigungselement und mit einem an dem dem ersten Befestigungselement entgegengesetzten Ende der Antriebseinrichtung axial relativ zum ersten Befestigungselement bewegbaren Gehäuserohr, das an seinem dem ersten Befestigungselement entgegengesetzten Ende ein mit dem bewegbaren Bauteil oder dem feststehenden Bauteil befestigbares zweites Befestigungselement aufweist, mit einem eine Gewindespindel und eine auf der Gewindespindel angeordneten Spindelmutter aufweisenden Spindeltrieb, durch den das erste Befestigungselement und das Gehäuserohr axial relativ zueinander bewegbar antreibbar sind, wobei der Spindeltrieb von einem Drehantrieb drehbar antreibbar ist, wobei die Gewindespindel mit ihrem einen Ende an dem Gehäuserohr drehbar gelagert und gegenüber dem Gehäuserohr axial feststehend angeordnet sowie von dem Drehantrieb drehbar antreibbar ist, wobei die mit dem ersten Befestigungselement verbundene Spindelmutter gegenüber dem Gehäuserohr verdrehgesichert ist und wobei die Spindelmutter mit einem Ende eines die Gewindespindel koaxial umschließenden Spindelrohres verbunden ist, an dessen anderem Ende das erste Befestigungselement fest angeordnet ist.

Bei derartigen Antriebseinrichtungen ist es bekannt die Befestigungselemente als Befestigungsohre auszubilden, um das Moment der Spindelmutter gegenüber dem bewegbaren Bauteil und dem feststehenden Bauteil abzustützen.

Aus der DE 103 30 176 A1, der US 2005/022453 A1, der US 5 346 045 A und der GB 593 175 A sind Antriebseinrichtungen der eingangs genannten Art bekannt.

Aus der US 6 755 458 B1 ist eine Antriebseinrichtung für die Klappe eines Fahrzeugs bekannt, die aus einer Gasfeder besteht, welche mit ihrem einen Ende an der Karosserie des Fahrzeugs und mit ihrem anderen Ende über einen Mitnehmer an der Klappe angelenkt ist. Die Hubbewegung erfolgt ausschließlich durch die Gasfeder. Der Mitnehmer ist entlang einer Bahn verschiebbar angeordnet, die fest an der Innenfläche der Heckklappe befestigt ist. Durch einen Spindeltrieb ist der Mitnehmer entlang der Bahn bewegbar. Ein Potentiometer ist von der Spindel des Spindeltriebs betätigbar.

Dies führt aber zu einer aufwendigen Montage der Antriebseinrichtung. Aufgabe der Erfindung ist es daher eine Antriebseinrichtung der eingangs genannten Art zu schaffen, die einfach aufgebaut und leicht montierbar ist.

Diese Aufgabe wird erfindungsgemäß dadurch gelöst, daß an dem Gehäuserohr ein das Spindelrohr mit Abstand umschließendes Führungsrohr angeordnet ist und daß durch einen Huberfassungssensor die Hubposition des Spindelrohres erfaßbar ist und der Huberfassungssensor ein Linearpotentiometer ist, dessen Schleifer an dem Spindelrohr und dessen Schleiferbahn mit dem Führungsohr fest verbunden ist, wobei das Führungsrohr einen radial durchgehenden Axialschlitz aufweist, durch den der an dem Spindelrohr fest angeordnete Schleifer zu der fest an dem Führungsrohr angeordneten Schleiferbahn hindurch und ein radial gerichteter Abstützzapfen der Spindelmutter hinein ragt.

Diese Ausbildung führt dazu, daß das Spindelmuttermoment innerhalb der Antriebseinrichtung abgestützt wird und nicht über die Befestigungselemente an dem bewegbaren Bauteil und dem feststehenden Bauteil abgestützt werden muß.

Dies ermöglicht es die Antriebseinrichtung in einer beliebigen Ausrichtung an dem bewegbaren Bauteil und dem feststehenden Bauteil zu befestigen, wodurch sich die Montierbarkeit der Antriebseinrichtung erheblich vereinfacht.

Durch den Huberfassungssensor ist die Hubposition des Spindelrohres erfaßbar. Damit sind dessen Ausgangssignale insbesondere zur Synchronisation bei parallelem Einsatz zweier Antriebseinrichtungen an der Klappe verwendbar. Es ist aber durch das Ausgangssignal auch die Verfahrposition der Antriebseinrichtung bestimmbar.

Der Huberfassungssensor als Linearpotentiometer führt zu einer einfachen und nur geringen Bauraum benötigenden Ausbildung.

Durch das Hindurchragen des radial gerichteten Abstützzapfens der Spindelmutter durch den radial durchgehenden Axialschlitz erfolgt auf einfache Weise eine Abstützung des Spindelmuttermoments.

In einfacher und leicht herstellbarer Weise kann das Gehäuserohr ein durch Umformen wie z.B. Tiefziehen hergestelltes Metallbauteil, insbesondere Aluminiumbauteil sein.

Das Spindelrohr kann ein durch Umformen wie z.B. Tiefziehen hergestelltes Metallbauteil, insbesondere Aluminiumbauteil sein.

Vorzugsweise ist der Drehantrieb ein Elektromotor, durch dessen Ausgangswelle die Gewindespindel oder ein Kupplungsbauteil einer Kupplung drehbar antreibbar ist.

Zur Reduzierung der Drehzahl und Erhöhung des Drehmomentes kann der Spindeltrieb über ein Getriebe von dem Drehantrieb drehbar antreibbar sein.

Ist der Spindeltrieb über eine biegsame Welle von dem Drehantrieb drehbar antreibbar, so kann der Drehantrieb an räumlich anderer Stelle als der Spindeltrieb angeordnet sein.

Zu einer kompakten Ausbildung kann aber auch der Drehantrieb und/oder das Getriebe fest in dem Gehäuserohr angeordnet sein.

Ist das Getriebe ein Stirnradgetriebe und/oder ein Umlaufgetriebe, so entsteht nur eine geringe Geräuschemission, die noch weiter minimiert wird, wenn die drehantriebsnahen Stufen des Getriebes als schrägverzahnte Stufen ausgebildet sind.

Zu einem einfachen und in beliebiger Drehlage zur Längsachse der Antriebseinrichtung montierbaren Ausführung führt es, wenn eines oder beide der Befestigungselemente ein Kugelkopf oder eine Kugelpfanne eines Kugelgelenks sind.

Zur Kraftunterstützung der Antriebseinrichtung und damit einem Klappengewichtsausgleich sowie zu einer geringen Dimensionierung des Drehantriebs führt es, wenn das erste Befestigungselement von einer Federkraft in Ausfahrrichtung von dem Gehäuserohr weg beaufschlagt oder beaufschlagbar ist.

Dies kann über dem gesamten Verstellhub oder auch nur über einen Teil des Verstellhubes erfolgen.

Dazu ist in einfacher Ausbildung das erste Befestigungselement von einer an dem Gehäuserohr abgestützten Druckfeder, insbesondere einer Schraubendruckfeder beaufschlagt.

Alternativ oder ergänzend dazu kann auch das erste Befestigungselement von einem Gasdruck beaufschlagt sein.

Die Kraft, die benötigt wird die Spindel manuell zu bewegen, wird vorzugsweise genau so gewählt, daß die Klappe in Zwischenpositionen bei deaktiviertem Drehantrieb gehalten werden kann. Somit ist bei elektromotorischem Drehantrieb eine stromlose Stop-Position problemlos realisierbar.

Zur Bestimmung der Verfahrgeschwindigkeit, der Verfahrposition und der Synchronisation paralleler Antriebseinrichtungen können durch einen Spindelsensor die Spindelumdrehungen erfaßbar sein.
Dabei ist vorzugsweise der Spindelsensor ein mit dem Gehäuserohr fest verbundener Hall-Sensor, dem ein mit der Gewindespindel fest verbundener Magnetring gegenüberliegend angeordnet ist, was zu einer einfachen Ausgestaltung führt.

Zu dem gleichen Zweck können auch durch einen Antriebssensor die Motorumdrehungen oder die Getriebeumdrehungen oder Kupplungsumdrehungen erfaßbar sein.

Eine einfache und bauraumsparende Ausbildung besteht dabei darin, daß der Antriebssensor ein feststehender, insbesondere mit dem Gehäuserohr fest verbundener Hall-Sensor ist, dem ein mit der Ausgangswelle des Drehantriebs oder mit einem Getriebeteil oder mit einem Kupplungsteil fest verbundener Magnetring gegenüberliegend angeordnet ist.

Zu Entkopplung des Drehantriebs von dem Spindeltrieb kann der Spindeltrieb über eine öffenbare Kupplung von dem Drehantrieb drehbar antreibbar.

Diese Kupplung kann eine formschlüssige oder eine reibschlüssige Kupplung sein.

Zum Ein- und Auskuppeln kann die Kupplung eine schaltbare, insbesondere schaltbare Magnetkupplung sein.

Auf einem besonderen Kupplungsantrieb kann aber verzichtet werden, wenn die Kupplung eine bei unbelasteter oder in Ausfahrrichtung belasteter Antriebseinrichtung offene und durch Belastung der Antriebseinrichtung in Einfahrrichtung schließbare Kupplung ist.

Dies führt auf einfache Weise zu einer manuellen Bewegbarkeit mit komfortablen Handkräften in Zugrichtung der Antriebsvorrichtung, da dann der Drehantrieb und ggf. das Getriebe nicht hemmend auf die Spindel wirken können.

Da keine Zugkräfte übertragen werden können, ergibt sich weiterhin eine optimale Hinderniserkennung und Hindernisausschaltung beim Schließen der Klappe.

Der Klappengewichtsausgleich ist vorzugsweise so auszulegen, daß immer ein resultierendes Moment in Schließrichtung wirkt. Das bedeutet, daß die Antriebseinrichtung die Klappe immer motorisch öffnen können muß. Zum Schließen muß die Klappe nur mit einer definierten Geschwindigkeit abgelassen werden.

Umschließt die Schraubendruckfeder das Führungsrohr mit Abstand und ist ebenfalls mit Abstand von einem mit dem ersten Befestigungselement verbundenen Überrohr umschlossen, so ist die Schraubendruckfeder sowohl geführt als auch radial nach innen und außen geschützt.

Ein Schutz der Bauteile der Antriebseinrichtung gegen Verschmutzung und Beschädigung wird dadurch erreicht, daß das Gehäuserohr und das Überrohr teleskopartig ineinander verschiebbar sind.

Zur leichten manuellen Bedienbarkeit mit gutem Wirkungsgrad ist die Gewindespindel eine mehrgängige Spindel mit vorzugsweise einer Steigung von ≥10 mm.

Zu einer schlanken Ausführung führt es, wenn die Komponenten Drehantrieb und/oder Getriebe und/oder Kupplung und/oder Spindeltrieb in Reihenanordnung zueinander angeordnet sind.

Sind die Komponenten Drehantrieb und/oder Getriebe und/oder Kupplung und/oder Spindeltrieb in Parallelanordnung zueinander angeordnet, so ist eine nicht so schlanke, dafür aber kürzere Ausbildung möglich.

Ausführungsbeispiele der Erfindung sind in der Zeichnung dargestellt und werden im folgenden näher beschrieben. Es zeigen
Figur 1 einen Querschnitt eines ersten Ausführungsbeispiels einer Antriebseinrichtung
Figur 2 einen vergrößerten Ausschnitt "X" der Antriebseinrichtung nach Figur 1
Figur 3 eine perspektivische Explosionsdarstellung der Antriebseinrichtung nach Figur 1
Figur 4 einen Querschnitt eines nicht erfindungsgemäßen Ausführungsbeispiels einer Antriebseinrichtung
Figur 5 eine perspektivische Explosionsdarstellung der Antriebseinrichtung nach Figur 4
Figur 6 einen Querschnitt eines nicht erfindungsgemäßen Ausführungsbeispiels einer Antriebseinrichtung
Figur 7 eine perspektivische Explosionsdarstellung der Antriebseinrichtung nach Figur 6.

Die in den Figuren dargestellten Antriebseinrichtungen besitzen ein Gehäuserohr 1, an dem ein Überrohr 2 teleskopisch verschiebbar geführt ist.

An dem dem Gehäuserohr 1 entgegengesetzten Ende des Überrohres 2 ist eine erste Kugelpfanne 3 und an dem dem Überrohr 2 entgegengesetzten Ende des Gehäuserohres 1 eine zweite Kugelpfanne 4 angeordnet, mittels derer die Antriebseinrichtung an einem feststehenden Karosseriebauteil eines Kraftfahrzeugs und an einem als Klappe ausgebildeten bewegbaren Bauteil des Kraftfahrzeugs gelenkig verbindbar ist.

In dem dem Überrohr 2 zugewandten Endbereich des Gehäuserohres 1 ist ein erstes Lagerteil 5 fest eingesetzt, in dem ein erstes Kupplungsteil 6 einer reibschlüssigen Kupplung 7 drehbar gelagert ist, das fest auf einem Ende einer in das Überrohr 2 ragenden Gewindespindel 8 sitzt.

Auf der Gewindespindel 8 ist eine Spindelmutter 9 gegenüber dem Gehäuserohr 1 drehfest angeordnet.

Die Spindelmutter 9 ist mit einem Ende eines die Gewindespindel 8 koaxial umschließenden Spindelrohres 11 verbunden, an dessen anderem Ende die erste Kugelpfanne 3 fest angeordnet ist.

Die Spindelmutter ist in einem das Spindelrohr 11 umschließenden Führungsrohr 10 axial verschiebbar geführt, das mit dem Gehäuserohr 1 fest verbunden ist.

In dem Ringspalt zwischen dem Führungsrohr 10 und dem dieses mit Abstand umschließenden Überrohr 2 ist eine Schraubendruckfeder 12 angeordnet, die mit ihrem einen Ende an dem Überrohr 2 im Bereich der ersten Kugelpfanne 3 und mit ihrem anderen Ende an dem Gehäuserohr 1 abgestützt ist.

Die Gewindespindel 8 trägt an ihrem dem ersten Kupplungsteil 6 abgewandten Ende eine Führungshülse 13, mit deren zylindrischer Mantelfläche die Gewindespindel 8 in dem Spindelrohr 11 axial verschiebbar geführt ist.

Das Führungsrohr 10 besitzt gleichmäßig am Umfang verteilt drei Axialschlitze 14, die sich weitgehend über dessen Länge erstrecken.

Entsprechend der Axialschlitze 14 sind an der Spindelmutter 9 radial hervorstehende Abstützzapfen 15 angeordnet, die in die Axialschlitze 14 hineinragen und für eine Verdrehsicherung der Spindelmutter 9 gegenüber dem Führungsrohr 10 sorgen.
Dem ersten Kupplungsteil koaxial gegenüberliegend ist in dem Gehäuserohr 1 ein zweites Kupplungsteil 16 angeordnet, wobei sich zwischen den beiden Kupplungsteilen 6 und 16 ein ringförmiger Reibbelag 28 befindet.

Über ein Axiallager 17 ist das zweite Kupplungsteil 16 mit seiner dem ersten Kupplungsteil 6 abgewandten Seite axial an einem in dem Gehäuserohr 1 fest angeordneten Widerlagerteil 18 abgestützt.

Das erste Kupplungsteil 6 und das zweite Kupplungsteil 16 weisen zwischen sich ein derartiges Bewegungsspiel auf, das sie sich eine reibschlüssige Verbindung lösend axial voneinander wegbewegen können.

Eine Abtriebswelle 19 eines insbesondere mehrstufigen Getriebes 20 ist koaxial drehfest mit dem zweiten Kupplungsteil 16 verbunden, wobei das Getriebe 20 von einem Elektromotor 21 drehbar antreibbar ist.

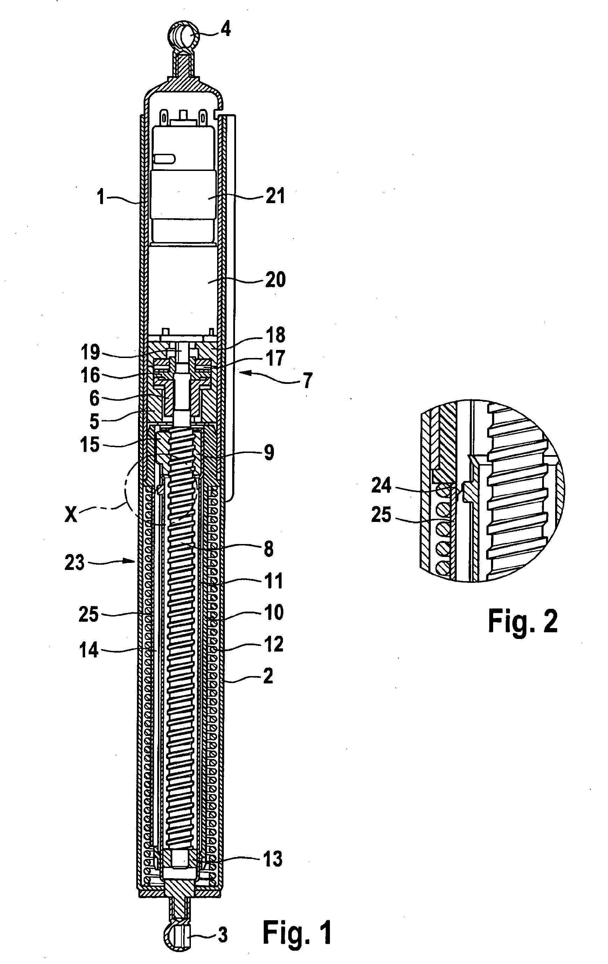

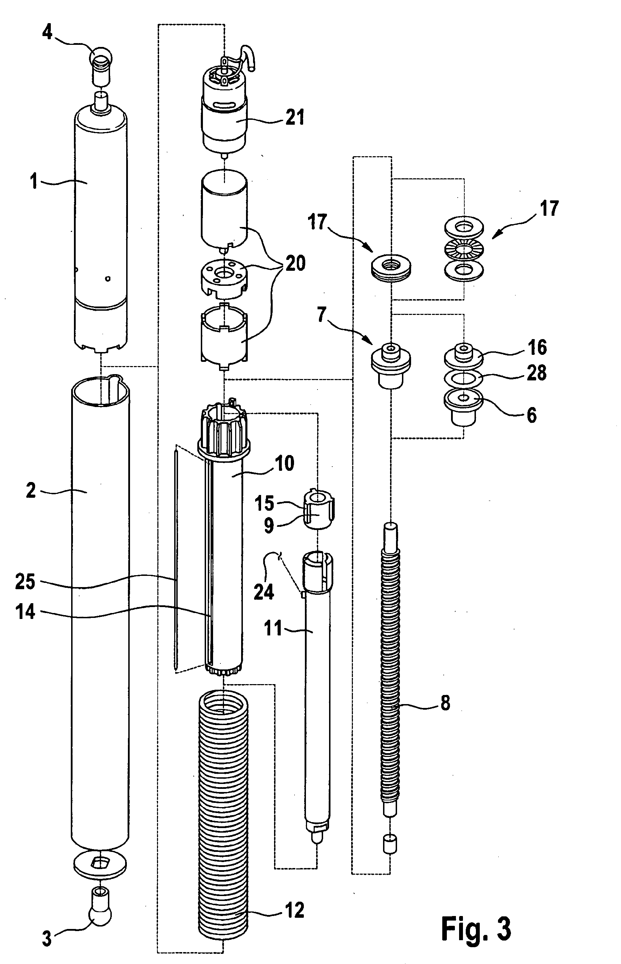

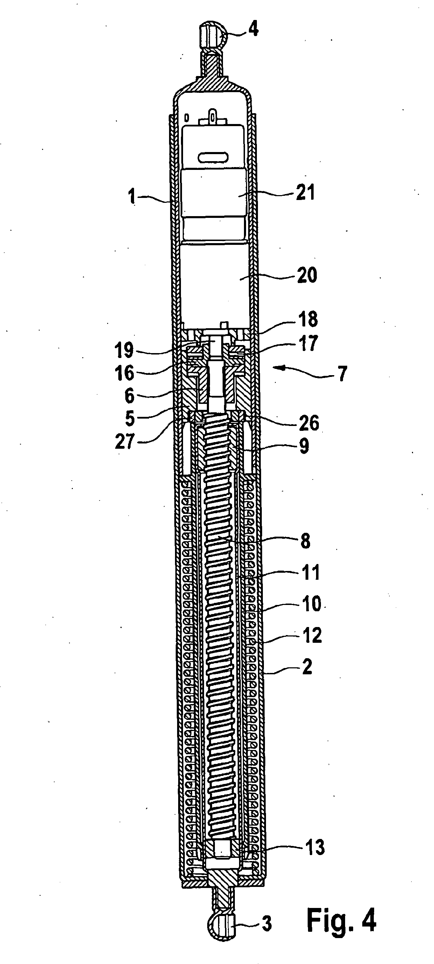

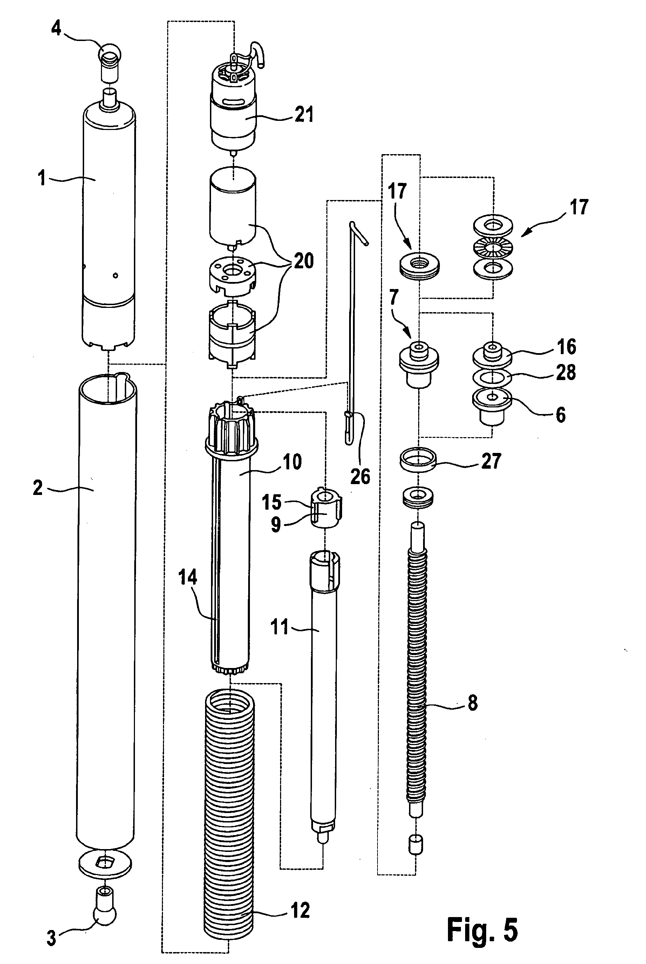

Bei den Ausführungsbeispielen der Figuren 1 bis 3 und den nicht erfindungsgemäßen Ausführungsbeispielen der Figuren 4 und 5 sind Getriebe 20 und Elektromotor 21 koaxial zur Kupplung 7 in dem Gehäuserohr 1 angeordnet.

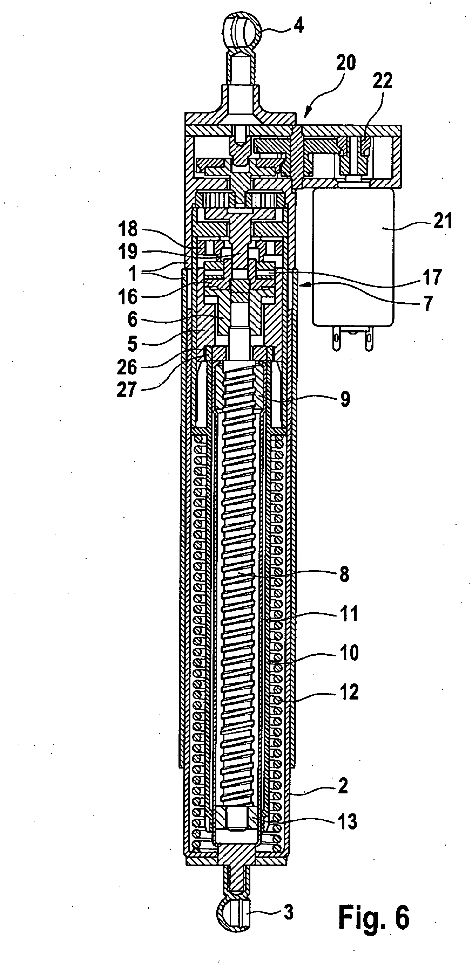

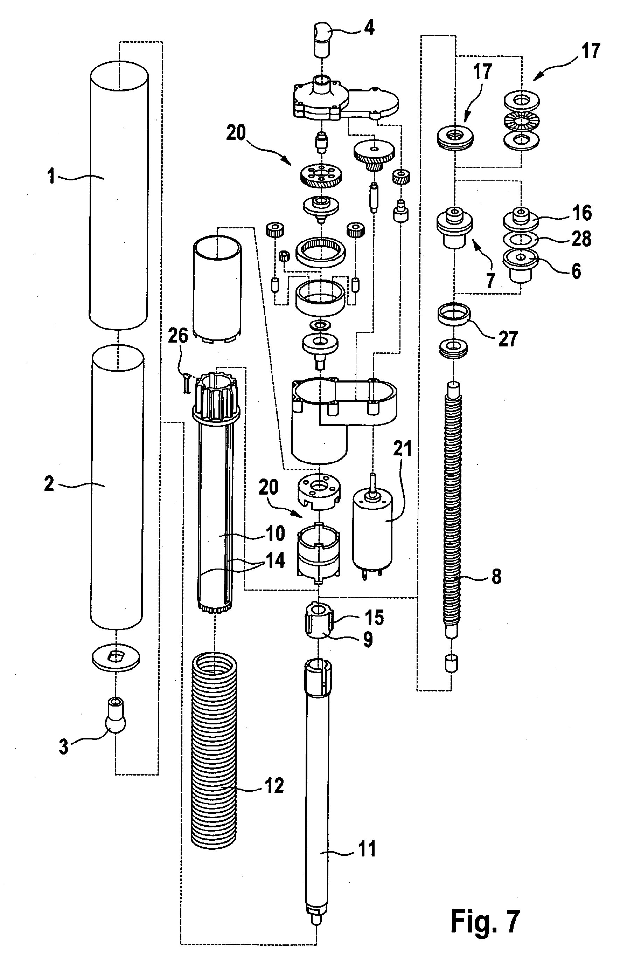

Bei dem nicht erfindungsgemäßen Ausführungsbeispiel der Figuren 6 und 7 ist der Elektromotor 21 parallel neben dem Gehäuserohr 1 angeordnet, wobei die Drehbewegung des Abtriebsritzels 22 des Elektromotors 21 von dem Getriebe 20 in das Gehäuserohr 1 hinein übertragen wird, um dort durch die Abtriebswelle 19 des Getriebes 20 auf das zweite Kupplungsteil 16 übertragen zu werden.

Wie insbesondere in Figur 2 zu sehen ist, weist das Ausführungsbeispiel der Figuren 1 bis 3 einen als Linearpotentiometer 23 ausgebildeten Huberfassungssensor auf.

Dazu ist nahe der Spindelmutter 9 ein Schleifer 24 an dem Spindelrohr 11 angeordnet, der durch einen der Axialschlitze 14 ragt und mit der Spindelmutter 9 und dem Spindelrohr 11 entlang einer Schleiferbahn 25 bewegbar ist, die sich über diesen Axialschlitz 14 an seiner Außenseite erstreckt.

Bei den nicht erfindungsgemäßen Ausführungsbeispielen der Figuren 4 bis 7 ist ein Spindelsensor vorgesehen, der einen an dem Führungsrohr 10 angeordneten Hall-Sensor 26 aufweist, welcher radial einem Magnetring 27 gegenüber liegt, der mit der Gewindespindel 8 fest verbunden ist.

### Bezugszeichenliste

- 1: Gehäuserohr
- 2: Überrohr
- 3: erste Kugelpfanne
- 4: zweite Kugelpfanne
- 5: Lagerteil
- 6: erstes Kupplungsteil
- 7: Kupplung
- 8: Gewindespindel
- 9: Spindelmutter
- 10: Führungsrohr
- 11: Spindelrohr
- 12: Schraubendruckfeder
- 13: Führungshülse
- 14: Axialschlitze
- 15: Abstützzapfen
- 16: zweites Kupplungsteil
- 17: Axiallager
- 18: Widerlagerteil
- 19: Abtriebswelle
- 20: Getriebe
- 21: Elektromotor
- 22: Abtriebsritzel
- 23: Linearpotentiometer
- 24: Schleifer
- 25: Schleiferbahn
- 26: Hall-Sensor
- 27: Magnetring
- 28: Reibbelag

## Patentansprüche

1. Antriebseinrichtung insbesondere für eine Klappe eines Fahrzeugs, mit einem mit einem feststehenden Bauteil oder einem bewegbaren Bauteil verbindbaren ersten Befestigungselement (3) und mit einem an dem dem ersten Befestigungselement (3) entgegengesetzten Ende der Antriebseinrichtung axial relativ zum ersten Befestigungselement (3) bewegbaren Gehäuserohr (1), das an seinem dem ersten Befestigungselement (3) entgegengesetzten Ende ein mit dem bewegbaren Bauteil oder dem feststehenden Bauteil befestigbares zweites Befestigungselement (4) aufweist, mit einem eine Gewindespindel (8) und eine auf der Gewindespindel (8) angeordneten Spindelmutter (9) aufweisenden Spindeltrieb, durch den das erste Befestigungselement (3) und das Gehäuserohr (1) axial relativ zueinander bewegbar antreibbar sind, wobei der Spindeltrieb von einem Drehantrieb drehbar antreibbar ist, wobei die Gewindespindel (8) mit ihrem einen Ende an dem Gehäuserohr (1) drehbar gelagert und gegenüber dem Gehäuserohr (1) axial feststehend angeordnet sowie von dem Drehantrieb drehbar antreibbar ist, wobei die mit dem ersten Befestigungselement (3) verbundene Spindelmutter (9) gegenüber dem Gehäuserohr (1) verdrehgesichert ist und wobei die Spindelmutter (9) mit einem Ende eines die Gewindespindel (8) koaxial umschließenden Spindelrohres (11) verbunden ist, an dessen anderem Ende das erste Befestigungselement (3) fest angeordnet ist, **dadurch gekennzeichnet, daß** an dem Gehäuserohr (1) ein das Spindelrohr (11) mit Abstand umschließendes Führungsrohr (10) angeordnet ist und daß durch einen Huberfassungssensor die Hubposition des Spindelrohres (11) erfaßbar ist und der Huberfassungssensor ein Linearpotentiometer (23) ist, dessen Schleifer (24) an dem Spindelrohr (11) und dessen Schleiferbahn (25) mit dem Führungsrohr (10) fest verbunden ist , wobei das Führungsrohr (10) einen radial durchgehenden Axialschlitz (14) aufweist, durch den der an dem Spindelrohr (11) fest angeordnete Schleifer (24) zu der fest an dem Führungsrohr (10) angeordneten Schleiferbahn (25) hindurch und ein radial gerichteter Abstützzapfen (15) der Spindelmutter (9) hinein ragt.

2. Antriebseinrichtung nach Anspruch 1, **dadurch gekennzeichnet, daß** der Drehantrieb ein Elektromotor (21) ist, durch dessen Ausgangswelle die Gewindespindel oder ein Kupplungsbauteil (16) einer Kupplung (9) drehbar antreibbar ist.

3. Antriebseinrichtung nach einem der vorhergehenden Ansprüche, **dadurch gekennzeichnet, daß** der Spindeltrieb über ein Getriebe (20) von dem Drehantrieb drehbar antreibbar ist.

4. Antriebseinrichtung nach einem der vorhergehenden Ansprüche, **dadurch gekennzeichnet, daß** der Spindeltrieb über eine biegsame Welle von dem Drehantrieb drehbar antreibbar ist.

5. Antriebseinrichtung nach einem der Ansprüche 1 bis 4, **dadurch gekennzeichnet, daß** der Drehantrieb und/oder das Getriebe (20) fest in dem Gehäuserohr (1) angeordnet sind.

6. Antriebseinrichtung nach Anspruch 3, **dadurch gekennzeichnet, daß** das Getriebe (2) ein Stirnradgetriebe und/oder ein Umlaufgetriebe ist.

7. Antriebseinrichtung nach Anspruch 3, **dadurch gekennzeichnet, daß** die drehantriebsnahen Stufen des Getriebes als schrägverzahnte Stufen ausgebildet sind.

8. Antriebseinrichtung nach einem der vorhergehenden Ansprüche, **dadurch gekennzeichnet, daß** eines oder beide der Befestigungselemente ein Kugelkopf oder eine Kugelpfanne (3, 4) eines Kugelgelenks sind.

9. Antriebseinrichtung nach einem der vorhergehenden Ansprüche, **dadurch gekennzeichnet, daß** das erste Befestigungselement von einer Federkraft in Ausfahrrichtung von dem Gehäuserohr (1) weg beaufschlagt oder beaufschlagbar ist.

10. Antriebseinrichtung nach Anspruch 9, **dadurch gekennzeichnet, daß** das erste Befestigungselement von einer an dem Gehäuserohr (1) abgestützten Druckfeder, insbesondere einer Schraubendruckfeder (12) beaufschlagt ist.

11. Antriebseinrichtung nach Anspruch 9, **dadurch gekennzeichnet, daß** das erste Befestigungselement von einem Gasdruck beaufschlagt ist.

12. Antriebseinrichtung nach einem der vorhergehenden Ansprüche, **dadurch gekennzeichnet, daß** durch einen Spindelsensor die Spindelumdrehungen erfaßbar sind.

13. Antriebseinrichtung nach Anspruch 12, **dadurch gekennzeichnet, daß** der Spindelsensor ein mit dem Gehäuserohr (1) fest verbundener Hall-Sensor (26) ist, dem ein mit der Gewindespindel (8) fest verbundener Magnetring (27) gegenüberliegend angeordnet ist.

14. Antriebseinrichtung nach einem der vorhergehenden Ansprüche, **dadurch gekennzeichnet, daß** durch einen Antriebssensor die Motorumdrehungen oder die Getriebeumdrehungen oder Kupplungsumdrehungen erfaßbar sind.

15. Antriebseinrichtung nach Anspruch 14, **dadurch gekennzeichnet, daß** der Antriebssensor ein feststehender, insbesondere mit dem Gehäüserohr fest verbundener Hall-Sensor ist, dem ein mit der Ausgangswelle des Drehantriebs oder mit einem Getriebeteil oder mit einem Kupplungsteil fest verbundener Magnetring gegenüberliegend angeordnet ist.

16. Antriebseinrichtung nach einem der vorhergehenden Ansprüche, **dadurch gekennzeichnet, daß** der Spindeltrieb über eine öffenbare Kupplung (7) von dem Drehantrieb drehbar antreibbar ist.

17. Antriebseinrichtung nach Anspruch 16, **dadurch gekennzeichnet, daß** die Kupplung (7) eine formschlüssige oder eine reibschlüssige Kupplung ist.

18. Antriebseinrichtung nach einem der Ansprüche 16 und 17, **dadurch gekennzeichnet, daß** die Kupplung eine schaltbare, insbesondere schaltbare Magnetkupplung ist.

19. Antriebseinrichtung nach einem der Ansprüche 16 und 17, **dadurch gekennzeichnet, daß** die Kupplung (7) eine bei unbelasteter oder in Ausfahrrichtung belasteter Antriebseinrichtung offene und durch Belastung der Antriebseinrichtung in Einfahrrichtung schließbare Kupplung ist.

20. Antriebseinrichtung nach Anspruch 10, **dadurch gekennzeichnet, daß** die Schraubendruckfeder (12) das Führungsrohr (10) mit Abstand umschließt und ebenfalls mit Abstand von einem mit dem ersten Befestigungselement verbundenen Überrohr (2) umschlossen ist.

21. Antriebseinrichtung nach Anspruch 20, **dadurch gekennzeichnet, daß** das Gehäuserohr (1) und das Überrohr (2) teleskopartig ineinander verschiebbar sind.

22. Antriebseinrichtung nach einem der vorhergehenden Ansprüche, **dadurch gekennzeichnet, daß** die Gewindespindel eine mehrgängige Spindel ist.

23. Antriebseinrichtung nach einem der vorhergehenden Ansprüche, **dadurch gekennzeichnet, daß** die Gewindespindel eine Steigung von ≥10 mm besitzt.

24. Antriebseinrichtung nach einem der vorhergehenden Ansprüche, **dadurch gekennzeichnet, daß** die Komponenten Drehantrieb und/oder Getriebe (20) und/oder Kupplung (7) und/oder Spindeltrieb in Reihenanordnung zueinander angeordnet sind.

25. Antriebseinrichtung nach einem der vorhergehenden Ansprüche, **dadurch gekennzeichnet, daß** die Komponenten Drehantrieb und/oder Getriebe (20) und/oder Kupplung (7) und/oder Spindeltrieb in Parallelanordnung zueinander angeordnet sind

## Claims

1. Drive device, in particular for a flap of a vehicle, with a first fastening element (3) which can be connected to a fixed component or to a moveable component and with a housing tube (1) which, at the end of the drive device opposite the first fastening element (3), is moveable axially relative and, at its end opposite the first fastening element (3), has a second fastening element (4) which can be fastened to the moveable component or to the fixed component, with a spindle drive which has a threaded spindle (8) and a spindle nut (9) arranged on the threaded spindle (8) and by means of which the first fastening element (3) and the housing tube (1) can be driven in an axially moveable manner relative to each other, the spindle drive being drivable rotatably by a rotary drive, wherein the threaded spindle (8) is mounted rotatably at its one end on the housing tube (1) and is arranged in an axially fixed manner with respect to the housing tube (1) and can be driven rotatably by the rotary drive, wherein the spindle nut (9) which is connected to the first fastening element (3) is secured against rotation with respect to the housing tube (1), and wherein the spindle nut (9) is connected to one end of a spindle tube (11) which surrounds the threaded spindle (8) coaxially and at the other end of which the first fastening element (3) is arranged fixedly, **characterized in that** a guide tube (10) surrounding the spindle tube (11) with a clearance is arranged on the housing tube (1) **in that** the stroke position of the spindle tube (11) can be detected by a stroke-detecting sensor and the stroke-detecting sensor is a linear potentiometer (23), the wiper (24) of which is arranged on the spindle tube (11) and the wiper track (25) of which is connected fixedly to the guide tube (10), the guide tube (10) having a radially continuous axial slot (14) through which the wiper (24), which is arranged fixedly on the spindle tube (11), protrudes to the wiper track (25) arranged fixedly on the guide tube (10) and into which a radially directed supporting pin (15) of the spindle nut (9) protrudes.

2. Drive device according to Claim 1, **characterized in that** the rotary drive is an electric motor (21) by means of the output shaft of which the threaded spindle or a clutch component (16) of a clutch (9) can be driven rotatably.

3. Drive device according to one of the preceding claims, **characterized in that** the spindle drive can be driven rotatably by the rotary drive via a gear (20).

4. Drive device according to one of the preceding claims, **characterized in that** the spindle drive can be driven rotatably by the rotary drive via a flexible shaft.

5. Drive device according to one of Claims 1 to 4, **characterized in that** the rotary drive and/or the gear (20) are arranged fixedly in the housing tube (1).

6. Drive device according to Claim 3, **characterized in that** the gear (2) is a spur gear and/or an epicyclic gear.

7. Drive device according to Claim 3, **characterized in that** those stages of the gear which are in the vicinity of the rotary drive are designed as helical toothed stages.

8. Drive device according to one of the preceding claims, **characterized in that** one or both of the fastening elements is or are a ball head or a ball socket (3, 4) of a ball-and-socket joint.

9. Drive device according to one of the preceding claims, **characterized in that** the first fastening element is acted upon or can be acted upon by a spring force in the extension direction away from the housing tube (1).

10. Drive device according to Claim 9, **characterized in that** the first fastening element is acted upon by a compression spring supported on the housing tube (1), in particular a helical coil compression spring (12).

11. Drive device according to Claim 9, **characterized in that** the first fastening element is acted upon by a gas pressure.

12. Drive device according to one of the preceding claims, **characterized in that** the spindle revolutions can be detected by a spindle sensor.

13. Drive device according to Claim 12, **characterized in that** the spindle sensor is a Hall sensor (26) which is connected fixedly to the housing tube (1) and opposite which is arranged an annular magnet (27) connected fixedly to the threaded spindle (8) .

14. Drive device according to one of the preceding claims, **characterized in that** the motor revolutions or the gear revolutions or clutch revolutions can be detected by a drive sensor.

15. Drive device according to Claim 14, **characterized in that** the drive sensor is a fixed Hall sensor which, in particular, is connected fixedly to the housing tube and opposite which is arranged an annular magnet connected fixedly to the output shaft of the rotary drive or to a gear part or to a clutch part.

16. Drive device according to one of the preceding claims, **characterized in that** the spindle drive can be driven rotatably by the rotary drive via an openable clutch (7).

17. Drive device according to Claim 16, **characterized in that** the clutch (7) is a positive or frictional clutch.

18. Drive device according to either of Claims 16 and 17, **characterized in that** the clutch is a switchable clutch, in particular a switchable magnetic clutch.

19. Drive device according to either of Claims 16 and 17, **characterized in that** the clutch (7) is a clutch which is open when the drive device is unloaded or is loaded in the extension direction and which can be closed by loading the drive device in the retraction direction.

20. Drive device according to Claim 10, **characterized in that** the helical compression spring (12) surrounds the guide tube (10) with a clearance and is surrounded, likewise with a clearance, with an overtube (2) connected to the first fastening element.

21. Drive device according to Claim 20, **characterized in that** the housing tube (1) and the overtube (2) can be displaced telescopically in one another.

22. Drive device according to one of the preceding claims, **characterized in that** the threaded spindle is a multi-threaded spindle.

23. Drive device according to one of the preceding claims, **characterized in that** the threaded spindle has a pitch of ≥ 10 mm.

24. Drive device according to one of the preceding claims, **characterized in that** the components rotary drive and/or gear (20) and/or clutch (7) and/or spindle drive are arranged in a series arrangement with respect to one another.

25. Drive device according to one of the preceding claims, **characterized in that** the components rotary drive and/or gear (20) and/or clutch (7) and/or spindle drive are arranged in a parallel arrangement with respect to one another.

## Revendications

1. Dispositif d'entraînement, en particulier pour un capot d'un véhicule, comprenant un premier élément de fixation (3) pouvant être relié à un composant fixe ou à un composant mobile et comprenant un tube de boîtier (1) mobile axialement par rapport au premier élément de fixation (3) à l'extrémité opposée au premier élément de fixation (3) du dispositif d'entraînement, lequel tube de boîtier comprend, à son extrémité opposée au premier élément de fixation (3), un deuxième élément de fixation (4) pouvant être fixé au composant mobile ou au composant fixe, comprenant un entraînement à broche comportant une broche filetée (8) et un écrou de broche (9) disposé sur la broche filetée (8), au moyen duquel entraînement à broche le premier élément de fixation (3) et le tube de boîtier (1) peuvent être entraînés de manière mobile axialement l'un par rapport à l'autre, l'entraînement à broche pouvant être entraîné en rotation par un entraînement rotatif, la broche filetée (8) étant montée à rotation, par l'une de ses extrémités, sur le tube de boîtier (1) et étant disposée de manière fixe axialement par rapport au tube de boîtier (1) et pouvant être entraînée en rotation par l'entraînement rotatif, l'écrou de broche (9) relié au premier élément de fixation (3) étant bloqué en rotation par rapport au tube de boîtier (1) et l'écrou de broche (9) étant relié à une extrémité d'un tube de broche (11) entourant de manière coaxiale la broche filetée (8), à l'autre extrémité duquel est disposé fixement le premier élément de fixation (3), **caractérisé en ce qu'**un tuyau du guidage (10) entourant le tube de broche (11) à distance de celui-ci est disposé sur le tube de boîtier (1) et **en ce que** la position de course du tube de broche (11) peut être détectée au moyen d'un capteur de détection de course et le capteur de détection de course est un potentiomètre linéaire (23) dont le curseur (24) est disposé sur le tube de broche (11) et dont la piste de curseur (25) est reliée fixement au tube de guidage (10), le tube de guidage (10) comprenant une fente axiale (14) radialement continue à travers laquelle fait saillie le curseur (24) disposé fixement sur le tube de broche (11) jusqu'à la piste de curseur (25) disposée fixement sur le tube de guidage (10) et dans laquelle fait saillie un tenon d'appui (15) orienté radialement de l'écrou de broche (9).

2. Dispositif d'entraînement selon la revendication 1, **caractérisé en ce que** l'entraînement rotatif est un moteur électrique (21) au moyen de l'arbre de sortie duquel la broche filetée ou un composant d'embrayage (16) d'un embrayage (9) peut être entraîné(e) en rotation.

3. Dispositif d'entraînement selon l'une quelconque des revendications précédentes, **caractérisé en ce que** l'entraînement à broche peut être entraîné en rotation par l'entraînement rotatif par le biais d'un engrenage (20).

4. Dispositif d'entraînement selon l'une quelconque des revendications précédentes, **caractérisé en ce que** l'entraînement à broche peut être entraîné en rotation par l'entraînement rotatif par le biais d'un arbre flexible.

5. Dispositif d'entraînement selon l'une quelconque des revendications 1 à 4, **caractérisé en ce que** l'entraînement rotatif et/ou l'engrenage (20) est/sont disposé(s) fixement dans le tube de boîtier (1).

6. Dispositif d'entraînement selon la revendication 3, **caractérisé en ce que** l'engrenage (2) est un engrenage droit et/ou un engrenage épicycloïdal.

7. Dispositif d'entraînement selon la revendication 3, **caractérisé en ce que** les étages, proches de l'entraînement rotatif, de l'engrenage sont réalisés sous forme d'étages à denture hélicoïdale.

8. Dispositif d'entraînement selon l'une quelconque des revendications précédentes, **caractérisé en ce que** l'un des éléments de fixation ou les deux éléments de fixation est/sont une tête sphérique ou une calotte sphérique (3, 4) d'une articulation sphérique.

9. Dispositif d'entraînement selon l'une quelconque des revendications précédentes, **caractérisé en ce que** le premier élément de fixation est sollicité ou peut être sollicité par une force de ressort à l'écart du tube de boîtier (1) dans la direction de déploiement.

10. Dispositif d'entraînement selon la revendication 9, **caractérisé en ce que** le premier élément de fixation est sollicité par un ressort de compression, en particulier un ressort de compression hélicoïdal (12), supporté sur le tube de boîtier (1).

11. Dispositif d'entraînement selon la revendication 9, **caractérisé en ce que** le premier élément de fixation est sollicité par une pression de gaz.

12. Dispositif d'entraînement selon l'une quelconque des revendications précédentes, **caractérisé en ce que** les tours de broche peuvent être détectés par un capteur de broche.

13. Dispositif d'entraînement selon la revendication 12, **caractérisé en ce que** le capteur de broche est un capteur de Hall (26) relié fixement au tube de boîtier (1) et en regard duquel est disposé un anneau magnétique (27) relié fixement à la broche filetée (8).

14. Dispositif d'entraînement selon l'une quelconque des revendications précédentes, **caractérisé en ce que** les tours du moteur ou les tours de l'engrenage ou les tours de l'embrayage peuvent être détectés par un capteur d'entraînement.

15. Dispositif d'entraînement selon la revendication 14, **caractérisé en ce que** le capteur d'entraînement est un capteur de Hall fixe, en particulier relié fixement au tube de boîtier, en regard duquel capteur est disposé un anneau magnétique relié fixement à l'arbre de sortie de l'entraînement rotatif ou à une partie d'engrenage ou à une partie d'embrayage.

16. Dispositif d'entraînement selon l'une quelconque des revendications précédentes, **caractérisé en ce que** l'entraînement à broche peut être entraîné en rotation par l'entraînement rotatif par le biais d'un embrayage (7) pouvant être ouvert.

17. Dispositif d'entraînement selon la revendication 16, **caractérisé en ce que** l'embrayage (7) est un embrayage à engagement positif ou à engagement par friction.

18. Dispositif d'entraînement selon l'une quelconque des revendications 16 et 17, **caractérisé en ce que** l'embrayage est un embrayage commutable, en particulier un embrayage magnétique commutable.

19. Dispositif d'entraînement selon l'une quelconque des revendications 16 et 17, **caractérisé en ce que** l'embrayage (7) est un embrayage qui est ouvert lorsque le dispositif d'entraînement n'est pas sollicité ou est sollicité dans le sens de déploiement et qui peut être fermé par sollicitation du dispositif d'entraînement dans le sens d'escamotage.

20. Dispositif d'entraînement selon la revendication 10, **caractérisé en ce que** le ressort de compression hélicoïdal (12) entoure le tube de guidage (10) à distance de celui-ci et est également entouré, à distance de celui-ci, par un sur-tube (2) relié au premier élément de fixation.

21. Dispositif d'entraînement selon la revendication 20, **caractérisé en ce que** le tube de boîtier (1) et le sur-tube (2) peuvent être déplacés l'un dans l'autre de manière télescopique.

22. Dispositif d'entraînement selon l'une quelconque des revendications précédentes, **caractérisé en ce que** la broche filetée est une broche à filets multiples.

23. Dispositif d'entraînement selon l'une quelconque des revendications précédentes, **caractérisé en ce que** la broche filetée présente un pas ≥ 10 mm.

24. Dispositif d'entraînement selon l'une quelconque des revendications précédentes, **caractérisé en ce que** les composants entraînement rotatif et/ou engrenage (20) et/ou embrayage (7) et/ou entraînement à broche sont disposés suivant un agencement en série les uns par rapport aux autres.

25. Dispositif d'entraînement selon l'une quelconque des revendications précédentes, **caractérisé en ce que** les composants entraînement rotatif et/ou engrenage (20) et/ou embrayage (7) et/ou entraînement à broche sont disposés suivant un agencement en parallèle les uns par rapport aux autres.
